# DEMANDE DE BREVET EUROPEEN

(11) **EP 2 360 110 A1**
(43) Date de publication de la demande: **24.08.2011**
(21) Numéro de dépôt: 11154192.6
(22) Date de dépôt: 11.02.2011
(51) Int. Cl.: B65G 69/28

(54) **Dispositif de contrôle de la position d'un véhicule par rapport à un quai**

(30) Priorité: 15.02.2010 FR 1051037
(71) Demandeur: Arnaud, Michel, 38260 Gillonnay (FR)
(72) Inventeur: Arnaud, Michel, 38260 Gillonnay (FR)
(74) Mandataire: Domange, Maxime

(57) **Abrégé**

L'invention concerne un dispositif de contrôle de la position d'un véhicule (2) par rapport à un quai (1), ce quai (1) étant muni d'au moins deux butoirs latéraux (10) par emplacement (Ei) fixés sur une partie verticale du quai (1), dite nez de quai (1), et d'un niveleur de quai (12) par emplacement (Ei) apte à être déployé entre le quai (1) et le véhicule (2) stationné à cet emplacement (Ei) sur une distance inférieure ou égale à la longueur maximale du niveleur de quai (12). Selon l'invention, le dispositif de contrôle comprend au moins deux ensembles de détection (D1, D2) comprenant chacun au moins une paire source pulsée/récepteur utilisant un rayonnement infrarouge placés à une hauteur supérieure à la plus grande hauteur de véhicule attendue, le récepteur étant apte à recevoir le signal pulsé retourné vers la source émettrice du signal pulsé.

## Description

### Arrière-plan de l'invention

La présente invention se rapporte au domaine général des dispositifs de contrôle de la position d'un véhicule par rapport à un quai. Plus particulièrement, l'invention concerne un dispositif susceptible d'être installé à proximité d'un quai destiné à accueillir des véhicules positionnés dans des emplacements prédéterminés, perpendiculairement au bord du quai.

Typiquement, il s'agit de quais susceptibles d'accueillir des camions pour leur chargement et/ou déchargement. Traditionnellement, un tel quai est muni d'au moins deux butoirs latéraux par emplacement, ces butoirs étant fixés sur une partie verticale du quai dite « nez de quai » proche duquel les camions viennent se positionner.

Classiquement, chaque emplacement est également muni d'un niveleur de quai, apte à être déployé entre le quai et le véhicule stationné à cet emplacement. Le niveleur de quai est généralement, soit à lèvre télescopique, soit à lèvre articulée. Dans tous les cas, il présente une longueur maximale de déploiement. L'utilisation du niveleur de quai pour charger ou décharger un véhicule implique donc que la benne du véhicule soit située à une distance inférieure à la longueur maximale du niveleur de quai.

Auparavant, la position des véhicules par rapport au quai était ajustée par chaque chauffeur avec l'aide d'un chef de quai qui signalait au besoin la nécessité de reculer, d'avancer ou d'arrêter le véhicule à une position donnée.

Actuellement, le personnel des sociétés de transport est tel que, généralement, il n'existe plus de chef de quai à proximité des quais de chargement/déchargement de véhicules.

Aujourd'hui, on observe donc que les chauffeurs viennent généralement au contact des butoirs latéraux placés de chaque côté d'un emplacement. Ces butoirs sont destinés à entrer en contact soit avec les tampons du véhicule lui-même, soit avec une autre partie du véhicule, notamment la paroi arrière de la benne.

Comme il existe une diversité de hauteur de benne, il arrive parfois que la benne se trouve à une hauteur supérieure à la hauteur des butoirs. Généralement une butée se produit néanmoins mais sans empêcher qu'une partie de la benne soit située au-dessus des butoirs. Un tel positionnement du véhicule n'empêche généralement pas le déploiement du niveleur de quai ni le chargement/déchargement de marchandise.

Cependant, des détériorations des butoirs sont alors souvent observées. En effet, dans le cas d'un chargement du véhicule, le placement d'une masse importante à bord de la benne entraîne généralement un mouvement vers le bas de l'ensemble de cette benne. Dans son mouvement vers le bas, il arrive couramment que la benne vienne s'appuyer sur le butoir et l'endommage, voire l'arrache.

De telles détériorations sont courantes et elles sont même observées dans le cas où le chauffeur a amené son véhicule seulement au contact des butoirs par l'intermédiaire des butoirs propres du véhicule ou de la benne sans qu'il y ait chevauchement de la benne sur les butoirs. En effet, les mouvements de la benne engendrés par le chargement/déchargement engendrent un cisaillement des fixations des butoirs par friction sur ceux-ci. La sollicitation en cisaillement des chevilles dans le béton provoque l'usure et parfois la rupture du lien entre le butoir et le nez de quai.

Néanmoins, amener le véhicule au contact des butoirs est la seule solution simple dont les chauffeurs disposent pour situer leur véhicule par rapport au quai.

Une solution existante consiste à munir le nez de quai de butoirs mobiles en translation verticale pour suivre les mouvements de la benne ou des butoirs des véhicules lors de leur chargement ou de leur déchargement.

Cela permet de résoudre le problème dans le cas où le véhicule vient au contact du butoir sans qu'aucune partie de la benne ne passe au-dessus du butoir. Dans le cas contraire, il peut se produire un arrachement du butoir malgré sa mobilité. Comme l'achat et l'installation de tels butoirs mobiles est couteuse, un tel événement s'avère souvent préjudiciable pour l'exploitation.

En particulier, cette solution est peu adaptée à l'évolution actuelle des véhicules poids lourds. Généralement, la hauteur de caisse à laquelle se situe la benne varie dans l'intervalle allant de 1000 à 1100 mm du sol.

Aujourd'hui, avec l'utilisation de plus en plus répandue de suspensions hydropneumatiques, il peut arriver que les camions présentent une hauteur de caisse allant jusqu'à 1350 mm.

Les quais se situant en moyenne à une hauteur de 1200 mm, il est donc de plus en plus courant que la benne du camion passe au-dessus du quai et génère l'arrachement du butoir, même mobile.

On sait aussi qu'il existe des dispositifs radars de recul susceptible d'être installés sur les véhicules ou sur le nez de quai lui-même. Néanmoins on sait que ces dispositifs sont généralement d'une précision approximative. Par ailleurs, l'installation de radars de grande précision sur tous les véhicules n'est pas envisageable car cela serait très couteux et poserait des problèmes de maintenance. L'installation de tels radars sur le nez de quai est également délicat puisque, comme on l'a vu ci-dessus, les hauteurs de caisse des véhicules accueillis sont susceptibles de varier. Cela engendre notamment des problèmes de justesse de détection de distance.

### Objet et résumé de l'invention

La présente invention a donc pour but principal de palier les inconvénients des dispositifs connus en proposant un dispositif comprenant au moins deux ensembles de détection comprenant chacun au moins une paire source pulsée/récepteur utilisant un rayonnement infrarouge placés à une hauteur supérieure à la plus grande hauteur de véhicule attendue, le récepteur étant apte à recevoir le signal pulsé retourné vers la source émettrice du signal pulsé,
un premier ensemble de détection étant apte à envoyer un signal et à recevoir le signal retourné sur au moins deux lignes de détection appartenant à un plan parallèle au nez de quai situé à une distance du nez du quai dite minimale correspondant à une distance minimale d'approche du véhicule par rapport aux butoirs du quai,
et un second ensemble de détection étant apte à envoyer un signal et à recevoir le signal retourné sur au moins une ligne de détection dite centrale située dans le plan vertical médian de l'emplacement à une distance du quai dite d'approche réglable en fonction de la longueur maximale du niveleur de quai et de la longueur d'empiétement de sécurité du niveleur de quai sur le véhicule,
le dispositif comprenant en outre au moins un module électronique relié aux paires sources/récepteurs pour recevoir l'instant d'émission de chaque source et l'instant de réception du signal reçu en retour et apte à calculer la durée de vol du signal pulsé émis par chaque source et retourné vers celle-ci pour détecter la présence ou l'absence du véhicule le long des lignes de détection et à actionner un dispositif d'avertissement en fonction de la durée de vol, ce dispositif d'avertissement signalant la position correcte du véhicule seulement lorsque le second ensemble de détection détecte la présence du véhicule dans la ligne de détection centrale et le premier ensemble de détection détecte l'absence du véhicule dans au moins les deux lignes de détection.

Un tel dispositif permet à la fois de savoir si le véhicule est suffisamment près du nez de quai pour permettre le déploiement et l'utilisation corrects du niveleur de quai et assure en parallèle que le véhicule n'est pas au contact des butoirs. En utilisant la rupture d'un faisceau vertical et non une mesure et une surveillance en continu d'une durée de temps de vol d'un faisceau horizontal, l'invention permet d'atteindre une très bonne fiabilité dans le positionnement des véhicules.

En outre, l'installation d'un dispositif selon l'invention ne requiert que la présence de structures situées hors des zones susceptibles d'être endommagées par la circulation et la présence des véhicules.

En effet, l'objet de l'invention ne nécessite pas la présence d'éléments disposés au sol ou fixés sur le nez de quai qui sont deux structures susceptibles d'être endommagées par des incidents liés à l'exploitation du quai.

En utilisant la réflexion d'un rayonnement infrarouge pour détecter la présence d'un véhicule sans s'intéresser précisément à la distance à laquelle cette réflexion a lieu, on permet une détection robuste et peu coûteuse. En effet, comme l'implémentation de l'invention peut nécessiter seulement l'installation de deux couples émetteur/récepteur infrarouges, une telle installation s'avère peu coûteuse.

Selon un premier mode de réalisation, le premier ensemble de détection comprend deux paires source/récepteur chacune située dans un des deux plans verticaux perpendiculaires au nez de quai et passant substantiellement par les butoirs, les lignes de détection étant alors verticales en vis-à-vis des butoirs.

Dans ce mode de réalisation, trois paires émetteurs/récepteurs doivent être installées pour mettre en oeuvre l'invention. Deux d'entre elles, latérales, sont situées en hauteur légèrement devant les butoirs. Une paire d'émetteur/récepteur centrale doit en outre être portée dans le plan médian de l'emplacement au-dessus de celui-ci. Les faisceaux, et donc les lignes de détection, sont verticaux dans ce mode de réalisation et on assure que le camion n'entre pas au contact des butoirs en même temps que l'on assure que le camion est à une distance suffisamment faible pour que la benne soit atteinte par le niveleur de quai. En particulier, dès lors que les tampons du véhicule ou sa benne coupent les faisceaux du premier ensemble de détection placés en vis-à-vis des butoirs, le dispositif d'avertissement en est informé. Dans ce cas où les faisceaux latéraux sont ainsi coupés, cela est par exemple signalé avec le dispositif d'avertissement typiquement un feu de signalisation, par exemple un feu rouge.

Dans un second mode de réalisation, le premier ensemble de détection comprend une unique paire source/récepteur placée dans le plan vertical médian de l'emplacement et montée sur un mécanisme oscillant autour d'un axe perpendiculaire au plan parallèle au nez de quai permettant de balayer ce plan parallèle au nez du quai sur un secteur angulaire prédéfini de part et d'autre de l'axe médian par la position des butoirs sur le nez de quai pour permettre que l'espace en vis-à-vis des butoirs et entre les butoirs soit balayé, les lignes de détection étant multiples, et réparties en éventail dans ce secteur angulaire.

Dans cette réalisation, une fonction sécuritaire est ajoutée au dispositif dans la mesure où l'espace entre les butoirs est balayé. Le dispositif est donc alors susceptible de permettre la détection de la présence d'une personne au sein de cet espace par traitement spécifique des données de durée de vol. Cela évite en particulier qu'une personne ne soit écrasée entre le nez de quai et l'arrière de la benne lors du recul du véhicule.

On remarque ici que, dans ce mode de réalisation, le module électronique est apte à traiter spécifiquement les données issues du balayage pour détecter, d'une part, la présence trop proche du véhicule en vis-à-vis des butoirs et, d'autre part, la présence d'un corps entre les butoirs.

Dans une telle réalisation, le déclenchement du dispositif d'avertissement est spécifique en fonction de ce qui est observé par le premier ensemble de détection. Dans ce mode de réalisation, la ligne de détection centrale est verticale et le nombre de lignes de détection du premier ensemble est important.

En effet, les lignes de détection du premier ensemble se répartissent en éventail dans le plan parallèle au nez de quai passant par la paire émetteur/récepteur. Le signal émis est donc envoyé et reçu sur une pluralité de lignes de détection appartenant à un plan parallèle au nez de quai situé à une distance du nez du quai dite minimale correspondant à une distance minimale d'approche du véhicule par rapport aux butoirs du quai. D'une fois sur l'autre, la ligne sur laquelle le camion sera détecté sera a priori différente.

Selon une caractéristique avantageuse de l'invention, le module électronique est apte à traiter spécifiquement les données de durée de vol observées avec le premier ensemble de détection sur un secteur angulaire correspondant à la largeur du niveleur de quai pour détecter le déploiement de celui-ci.

Avec cette caractéristique, le dispositif selon l'invention est capable de contrôler le déploiement correct du niveleur de quai. Dans le cas où le déploiement est correct, le module électronique est apte à envoyer des signaux à destination d'appareillages spécifiques pour déclencher des actions automatiques spécifiques telles que l'ouverture d'une porte ou l'autorisation de circulation sur le quai et, au contraire, le verrouillage d'une porte et l'interdiction de circulation sur le quai dans le cas contraire. Le dispositif selon l'invention permet donc de vérifier le déploiement du niveleur sans ajout d'élément technique supplémentaire que celui nécessaire pour le contrôle de position du véhicule. Seule une partie du traitement de données réalisée au sein du module électronique est alors dédiée à cet aspect de sécurité.

Selon une caractéristique avantageuse, le dispositif d'avertissement est apte à inhiber le déploiement du niveleur tant que l'arrière du véhicule n'est pas détecté comme étant positionné entre les deux plans parallèles au nez de quai auxquels appartiennent les lignes de détection du premier et du second ensemble de détection.

Un tel fonctionnement du dispositif d'avertissement assure que le niveleur n'est déployé que lorsque le véhicule est positionné correctement par rapport au nez de quai. Cette inhibition du fonctionnement du niveleur est très avantageuse d'un point de vue sécuritaire.

Selon une caractéristique particulière, le dispositif comprend un détecteur de présence annexe placé à une distance du nez de quai supérieure aux distances auxquelles sont placées les deux ensembles de détection, ce détecteur de présence annexe déclenchant une mise sous tension des ensembles de détection et, le cas échéant, du mécanisme oscillant.

Cette caractéristique annexe permet d'éviter la mise sous tension permanente et continue du dispositif de contrôle de la position du véhicule et permet donc de réaliser des économies d'énergie.

Pratiquement, le détecteur de présence annexe est un détecteur choisi parmi les détecteurs à boucle magnétique placés au sol et les détecteurs à paire source/récepteur infrarouge à faisceau orienté vers le bas dans le plan vertical médian de l'emplacement.

Avec de tels détecteurs de présence annexes, on assure la détection de la présence d'un véhicule au niveau de chaque emplacement de manière simple et robuste.

Selon une caractéristique particulière, le second ensemble de détection comprend une unique paire source/récepteur placée dans le plan vertical médian de l'emplacement et montée sur un mécanisme oscillant autour d'un axe perpendiculaire au plan parallèle au nez de quai permettant de balayer ce plan parallèle au nez de quai sur un secteur angulaire défini de part et d'autre de l'axe médian défini par rapport à une dimension d'un espace de sécurité prédéfini par une norme et situé entre les butoirs.

Cette caractéristique permet de réaliser un contrôle complémentaire de sécurité par balayage d'un espace situé entre les butoirs. Avantageusement, le balayage sera sur un secteur angulaire plus petit que celui réalisé par le premier ensemble de détection car il est souhaitable d'éviter que les tampons du véhicule ne viennent occulter le faisceau du second ensemble de détection et ainsi signaler au dispositif d'avertissement que le véhicule est bien positionné alors même que le véhicule n'est pas bien positionné par rapport aux dimensions du niveleur de quai.

Selon une caractéristique avantageuse, l'oscillation du second ensemble de détection est activée une seule fois après que la présence d'un véhicule ait été détectée par le détecteur de présence annexe.

Dans ce cas, on assure que l'oscillation du second ensemble de détection réalise une fonction de sécurité et évite un déclenchement malencontreux du dispositif d'avertissement pour la détection du tampon du véhicule seul, alors que la benne n'est pas bien située par rapport au nez de quai.

Selon une caractéristique avantageuse de l'invention, le module électronique est apte à déclencher le dispositif d'avertissement seulement pour un temps de vol inférieur à un temps de vol prédéterminé correspondant à une hauteur de gabarit minimale prédéterminée.

Cette caractéristique permet de ne pas détecter la présence d'objets d'une hauteur inférieure à la hauteur attendue pour les véhicules susceptibles d'être stationnés aux emplacements au-dessus desquels le dispositif de contrôle est installé. Ainsi, les durées de vols inférieures à la durée de vol correspondant au sol est supérieure à celle correspondante à la hauteur minimale attendue, pourront être considérées par le module électronique comme une donnée révélant de la problématique de sécurité.

Dans des réalisations préférentielles, la distance minimale prédéterminée est comprise dans l'intervalle défini par l'épaisseur du butoir + 20 millimètres et l'épaisseur du butoir + 50 millimètres.

Ces dimensions correspondent à un positionnement moyen, convenable pour une grande quantité de quais tels qu'exploités actuellement.

Selon une réalisation particulière, la distance d'approche est comprise dans l'intervalle défini par la longueur maximale du niveleur de quai diminuée de la longueur d'empiétement de sécurité et diminuée également de 20 millimètres et la longueur maximale du niveleur de quai diminuée de la longueur d'empiétement de sécurité et diminuée également de 200 millimètres.

De nouveau, ces dimensions correspondent aux dimensions moyennes observées et convenables pour le positionnement des véhicules devant un nez de quai.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente une vue de dessus d'un quai sur lequel est installé un dispositif selon un premier mode de réalisation particulier de l'invention,
- la figure 2 représente une vue de dessus d'un quai sur lequel est installé un dispositif selon un second mode de réalisation particulier de l'invention,
- la figure 3 représente une vue en coupe du dispositif de contrôle de position et du quai sur lequel il est installé,
- la figure 4 illustre le fonctionnement d'un second mode de réalisation de l'invention relatif au premier ensemble de détection,
- la figure 5 illustre un mode de réalisation particulier de l'invention relatif au second ensemble de détection, et
- la figure 6 montre un exemple de mise en oeuvre d'un ensemble de détection oscillant.

### Description détaillée d'un mode de réalisation

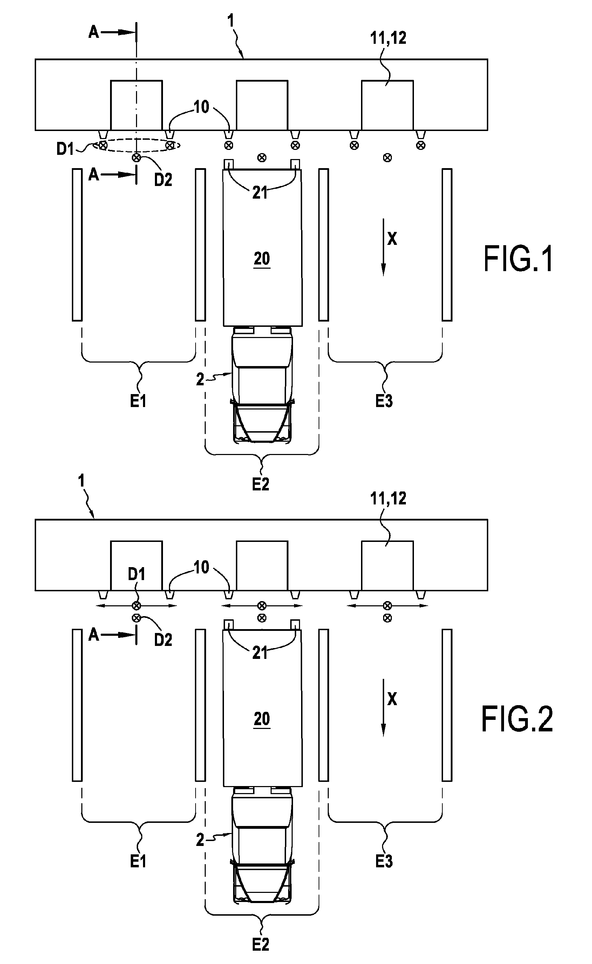

La figure 1 représente une vue de dessus d'un quai 1 auprès duquel des véhicules 2 sont susceptibles de venir se placer dans des emplacements parallèles Ei, avec i=1 à 3 sur la figure 1, matérialisés avantageusement par des marquages au sol. Ces emplacements donnent typiquement accès à des dispositifs de chargement/déchargement tels qu'un sas avec une porte donnant accès à un entrepôt.

Chaque emplacement est muni d'un niveleur de quai noté 12 qui peut être un niveleur télescopique ou un niveleur articulé. Un tel niveleur 12 est classiquement placé dans une fosse référencée 11. Par commodité de représentation, le niveleur 12 et la fosse 11 sont représentés schématiquement ensemble sur les figures 1 et 2. Au niveau de chaque emplacement, sont en outre placés des butoirs latéraux 10 pour protéger un camion 2 comprenant classiquement une benne 20 du contact du quai 1.

Généralement, ces butoirs 10 sont destinés à venir en contact de tampons 21 placés sur le véhicule 2 et éviter ainsi le contact avec le nez de quai dans le cas où le camion 2 recule trop. Il peut néanmoins s'avérer que le véhicule 2 ne comprenne pas de tels tampons 21 et, dans ce cas, ce sera directement un pare-choc ou la benne 20 qui viendra au contact des butoirs 10.

La présence ou l'absence de tels tampons 21 sur le véhicule 2 constitue un problème particulier pour ce qui est du contrôle de la position du véhicule 2 par rapport au quai 1. En effet, s'il se trouve que le contrôle de position est prévu pour être réalisé au niveau des tampons 21 et non au niveau de l'extrémité arrière de la benne 20, la position du véhicule 2 peut ne pas être celle attendue. Dans ce cas, le niveleur 12 peut ne pas être adapté pour la distance séparant alors l'arrière de la benne 20 et le quai 1. Cela peut se produire notamment avec des dispositifs placés sur le nez de quai et mettant en oeuvre un principe de radar horizontal.

En particulier, avec un principe de radar horizontal, si ce sont les tampons 21 qui sont détectés et non la position de la benne 20, il peut se produire que le niveleur de quai 12 ne soit pas assez long pour parvenir jusqu'à la benne 20 et permettre le chargement/déchargement du véhicule.

Pour assurer une détection efficace de la position du véhicule, l'invention propose de disposer deux ensembles de détection D1 et D2 spécifiques dans leur structure et dans leur fonction.

Sur la figure 1, représentant un premier mode de réalisation de l'invention, l'ensemble de détection D1 est constitué par deux paires émetteur/récepteur situés en vis-à-vis des butoirs 10 et émettant un faisceau infrarouge vertical en vis-à-vis des butoirs 10 légèrement devant ceux-ci. L'émetteur est une source infrarouge pulsée.

Le dispositif comprend en outre une paire émetteur/récepteur centrale D2 pour détecter la position de la benne 20 du véhicule 2 tel que représenté sur l'emplacement E2 de la figure 1.

La figure 2 représente un second mode de réalisation où deux paires émetteurs/récepteurs sont utilisés à deux distances différentes. Au moins la paire émetteur/récepteur D1 est oscillante ainsi que schématisé par une double flèche.

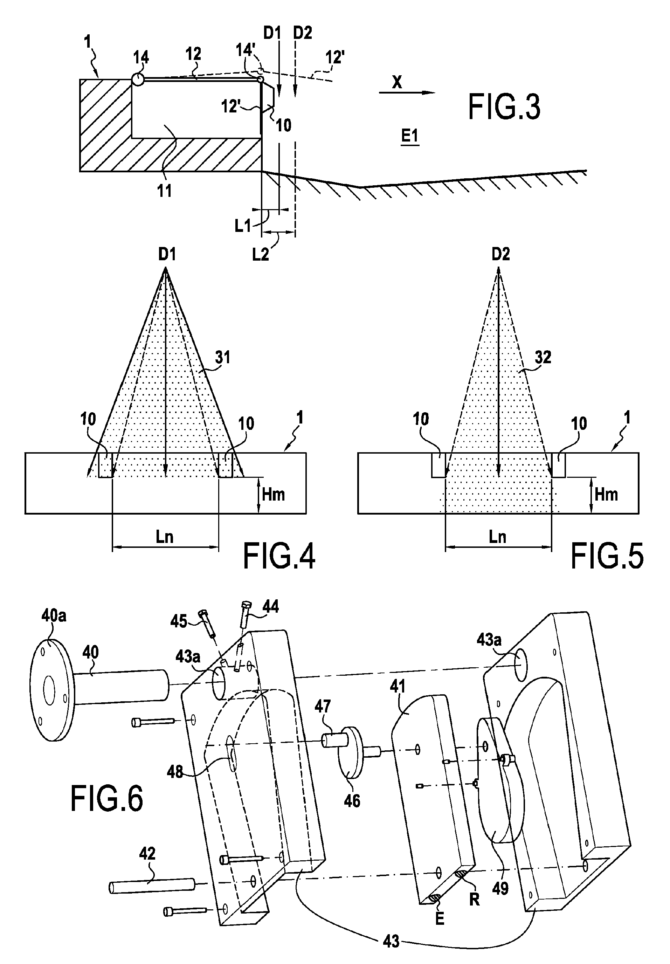

Sur la figure 3, est représentée une coupe AA du quai représenté sur la figure 1 ou sur la figure 2. En effet une telle coupe est semblable pour les deux modes de réalisation. Sur cette figure, le niveleur de quai 12 est un niveleur repliable, articulé autour d'un axe principal 14 d'un axe secondaire 14'. L'axe principal 14 permet de soulever le niveleur de quai dans sa totalité et l'axe secondaire 14' permet de déployer une lèvre articulée notée 12'.

Une fosse 11 est présente dans le quai 1 pour le stockage du niveleur de quai 12 et, également, pour contenir le mécanisme permettant de l'articuler, ce mécanisme n'étant pas représenté ici.

Sur la figure 3, les faisceaux émis par les ensembles de détection D1 et D2 sont représentés par des flèches orientées vers le bas. Les émetteurs infrarouges utilisés présentent une focalisation classique à 5 mètres avec, typiquement, une tache de 4 mm de diamètre au point de focalisation. Ainsi, comme la hauteur à laquelle sont placées les paires émetteur (source pulsée)/récepteur est inférieure à 5 mètres, on assure que le diamètre du faisceau est étroit et généralement de l'ordre de quelques millimètres de diamètre, typiquement entre 4 et 6 mm. Une telle focalisation classique d'un faisceau infrarouge est très utile dans l'invention puisqu'un diamètre plus important du faisceau empêcherait une détection fiable.

Ainsi, selon l'invention, le premier ensemble de détection D1 génère l'envoi d'au moins deux lignes de détection dans un plan situé à une distance L1 du nez de quai. Cette distance L1 est supérieure à l'épaisseur du butoir et est généralement comprise entre l'épaisseur du butoir plus 20 mm et l'épaisseur du butoir plus 50 mm.

Par ailleurs, le second ensemble de détection D2 émet un faisceau dans le plan situé à la distance L2 du nez de quai. Cette distance L2 est inférieure à la longueur maximale du niveleur de quai 12 auquel est retranchée une longueur d'empiètement minimale de sécurité. On note que le faisceau émis par le second ensemble de détection D2, appartenant au plan de coupe, est représenté en traits pointillés.

La figure 4 explicite le fonctionnement du second mode de réalisation de l'invention dans lequel le premier ensemble de détection D1 est constitué d'une seule paire émetteur/récepteur, apte à balayer un secteur angulaire 31 du plan parallèle au nez de quai 1.

Le secteur angulaire 31 balayé, représenté par une zone grisée, est délimité par deux positions extrêmales du faisceau émis. Le secteur angulaire 31 obtenu permet de couvrir l'extrémité latérale des butoirs 10. Avantageusement, il est délimité, sur le bas, par une ligne placée à une hauteur notée Hm qui est la hauteur minimale de détection de la présence d'un véhicule. En dessous de cette hauteur minimale Hm, c'est-à-dire pour une durée de vol supérieure à une durée de vol correspondant à l'aller-retour du signal au niveau de cette hauteur minimale Hm, si un élément est détecté au-dessus du sol, il sera avantageusement interprété par le module électronique comme signalant la présence d'un corps étranger et pourra générer une action de sécurité au niveau du dispositif d'avertissement.

Typiquement, la hauteur Hm sera choisie entre 500 et 800 millimètres. Le traitement du signal de retour reçu par le récepteur de la paire émetteur/récepteur applique classiquement un décalage électronique (« offset » en anglais) et utilise un seuillage sur la durée de vol pour engendrer la détection de la benne du camion et envoyer un signal vers le dispositif d'avertissement.

La paire émetteur/récepteur est avantageusement apte à faire un nombre de mesures par seconde de l'ordre de 20 mesures. Le balayage aller-retour du secteur angulaire quant à lui se fait avantageusement sur une durée comprise entre 1,5 et 2,5 secondes.

Avantageusement, les ensembles de détection sont activés par un détecteur annexe de présence du véhicule 2, par exemple un détecteur à boucle magnétique. A partir de leur activation, les ensembles de détection envoient des faisceaux à intervalles réguliers en utilisant un signal pulsé.

Chaque impulsion donne lieu au retour d'un signal reçu sur le récepteur. Dès lors que le véhicule a reculé de manière à se trouver sous le faisceau du second ensemble de détection D2 central, la durée de vol du signal est raccourcie. Le module électronique détecte ainsi la présence du camion dès lors que la durée de vol est inférieure à la durée de vol correspondant à la hauteur minimale. Il déclenche alors le fonctionnement du dispositif d'avertissement, qui peut être un feu passant du rouge au vert ou tout autre dispositif d'avertissement accessible au chauffeur, est actionné.

Le fonctionnement des deux paires émetteur/récepteur du premier ensemble de détection selon le premier mode de réalisation ou de l'unique paire émetteur/récepteur à balayage du premier ensemble de détection selon le second mode de réalisation consiste également en l'émission d'un signal pulsé reçu en retour par le récepteur associé à l'émetteur. Lorsque la durée de vol est raccourcie sur au moins une des lignes de détection placées en vis-à-vis des butoirs à une durée inférieure à la durée de vol correspondant à la hauteur minimale, le dispositif d'avertissement est informé. Typiquement cela fait passer le feu vert au feu rouge afin que le chauffeur procède à l'avancée du véhicule de manière à ce que le camion se situe de nouveau entre les deux plans parallèles au nez de quai dans lesquels sont placés les deux ensembles de détection.

Les lignes de détection utilisées pour réaliser cette détection sont les deux lignes verticales du premier ensemble de détection dans le premier mode de réalisation et une pluralité de lignes obliques du secteur angulaire de balayage passant devant les butoirs dans le second mode de réalisation.

Le balayage sur le secteur angulaire 31 permet de détecter la présence d'un butoir du camion trop proche du quai même si le camion est décalé par rapport à l'emplacement et donc par rapport aux butoirs du quai.

Ainsi, selon l'invention, de nombreux cas de figures d'erreurs de placement du camion ou de particularités de placement peuvent être détectées. L'invention permet de détecter le positionnement du camion même si les butoirs du camion sont en quinconce par rapport à ceux du quai. Le second mode de réalisation de l'invention permet aussi de détecter un positionnement trop proche du quai même pour un camion portant des butoirs qui ne pourraient pas s'aligner avec ceux du quai, par exemple des butoirs plus rapprochés que ceux du quai. L'invention permet ainsi, dans tous les cas, d'assurer que le camion est positionné à une distance correcte du quai.

Dans des cas particuliers où de telles erreurs ou particularités ne sont pas attendues, la détection du camion pourra être limitée à deux sous-secteurs angulaires placés de part et d'autre de l'emplacement devant les butoirs seulement. Cela est illustré par des flèches en pointillés sur la figure 4 limitant les sous-secteurs angulaires avec les flèches extrémales du secteur angulaire 31. Le balayage central pourra alors être utilisé pour la sécurité.

Une fois le camion positionné, le secteur angulaire central parcouru par les lignes de détection sur la largeur notée Ln sur cette dernière figure est avantageusement utilisé pour détecter le déploiement du niveleur de quai 12. Le traitement des données recueillies pendant le balayage de ce secteur angulaire sera avantageusement exploité dans ce sens et permettra avantageusement de commander des dispositifs de sécurité annexe comme l'ouverture/fermeture d'une porte ou d'un sas etc.

La figure 5 montre une option du dispositif dans lequel le second ensemble de détection est également monté sur un mécanisme oscillant permettant le balayage d'un secteur angulaire noté 32 situé entre les butoirs 10.

Un tel balayage répond à une problématique de sécurité tout en assurant la détection de la benne du véhicule. En effet, le secteur angulaire 32 inclut nécessairement un secteur angulaire généralement plus réduit ne pouvant pas inclure les secteurs angulaires dans lesquels peuvent se trouver les tampons du véhicule. C'est dans ce secteur angulaire central réduit que sera alors réalisée la détection de la benne du véhicule 2.

La figure 6 montre un exemple d'implémentation de l'invention autour d'une potence horizontale 40 placée au dessus du quai et perpendiculairement au nez de quai. La potence 40 est avantageusement fixée à un mur présent en bordure ou en retrait sur le quai. Pour être fixée, à l'extrémité destinée à être fixée sur le mur, la potence 40 inclut avantageusement une platine circulaire/annulaire 40a avec trois trous à 120°.

Sur la figure 6 est schématisé le premier ensemble de détection D1 du second mode de réalisation. Il inclut une paire émetteur/récepteur E/R monté sur le bas d'un corps oscillant 41 monté autour d'un axe 42 fixé dans un châssis 43 fixe par rapport à la potence 40. Pour être fixé à la potence 40, le châssis 43 comprend un orifice 43a le traversant de part en part. L'orifice 42a est avantageusement centré sur le châssis 43 pour permettre d'utiliser la pesanteur pour le positionnement de l'ensemble de détection D1. Au moins deux vis de serrage notées 44 et 45 débouchent dans cet orifice. Le serrage de ces vis vient plaquer la potence 40 contre les parois de l'orifice 43a et permet donc de solidariser le châssis 43 avec la potence 40.

Avec la réalisation avantageuse représentée sur la figure 6, le premier ensemble de détection D1 est coulissé sur la potence de fixation 40. Ensuite, la pesanteur assure que l'ensemble se place correctement par rapport à la verticale. L'ensemble D1 se met ainsi en place automatiquement. Il est alors fixé sur la potence 40 par serrage des vis 44 et 45.

Le positionnement de l'ensemble de détection D2 utilise des moyens identiques permettant de coulisser cet ensemble de long de la potence puis de fixer sa position.

La fixation sur un tube/potence permet donc de régler la position de D1 et D2 sur cotes. Ainsi l'invention s'adapte à tous types de quai quelle que soit la taille de la lèvre du niveleur de quai et la taille des butoirs. En effet, les ensembles de détection peuvent être disposés au besoin le long de la potence sans qu'il soit besoin d'ajouter d'éléments. Ainsi D2 pourra prendre deux positions distinctes suivant que le niveleur possède une lèvre courte ou une lèvre longue.

A l'intérieur du châssis 43, un moteur 49 est fixé au corps oscillant 41. Il met en rotation un élément 46 portant un téton excentré 47. Ce téton excentré 47 est engagé dans un trou oblong 48 du châssis 43. On remarque que, ici, l'élément 46 traverse librement le corps oscillant 41. Dans une autre réalisation, le moteur 49 peut simplement être solidarisé avec le corps 41 du coté opposé à celui sur lequel il est fixé sur la figure 6. Le moteur 49 est alors placé à proximité du trou oblong 48 et l'élément 46 est alors directement placé entre le moteur 49 et le trou oblong 48.On note ici que l'axe 42 d'articulation du corps 41 dans le châssis 43 est parallèle à la potence de fixation 40 et est, en tout cas, perpendiculaire au nez de quai. Ainsi, lorsque l'élément 46 est mobilisé en rotation, il provoque, grâce à l'engagement du téton 47 dans le trou oblong 48, l'oscillation du corps 41 et donc de la paire émetteur/récepteur E/R autour de l'axe 42. Cela permet le balayage d'un secteur angulaire ainsi que défini auparavant.

On remarque enfin que diverses mises en oeuvre peuvent être réalisées selon les principes de l'invention. Enfin, on remarque que les ensembles de détection placés en haut des emplacements sont susceptibles d'interagir avec les parties hautes d'un sas. En particulier, lorsque qu'un camion recule, il arrive qu'il vienne ouvrir un sas sur le haut de l'emplacement destiné à protéger le chargement/déchargement de la pluie. Dans ce cas, la potence portant les ensembles de détection selon l'invention sera généralement placée derrière les éléments du sas qui sont souvent des lames plastiques qui sont relevées au contact du haut de la benne du camion.

On remarque que ces lames sont alors susceptibles de venir masquer les ensembles de détection et empêcher leur fonctionnement. Aussi, en amont des ensembles de détection, la potence comprend avantageusement un chasse-lame, par exemple fabriqué en métal. Ce chasse-lame est légèrement plus large que les ensembles de détection. Par ailleurs, les éléments du sas sont tels que le sas est découpé verticalement au niveau de la potence. Le chasse-lame fait que les deux parties latérales centrales sont écartées lorsque le camion vient les pousser vers le quai. On évite alors qu'une lame vienne se placer devant le détecteur.

## Revendications

1. Quai (1) destiné à accueillir des véhicules (2) positionnés dans des emplacements (Ei) prédéterminés perpendiculairement au bord du quai (1), ce quai (1) étant muni d'au moins deux butoirs latéraux (10) par emplacement (Ei) fixés sur une partie verticale du quai (1), dite nez de quai, d'un niveleur de quai (12) par emplacement (Ei) apte à être déployé entre le quai (1) et le véhicule (2) stationné à cet emplacement (Ei) sur une distance inférieure ou égale à la longueur maximale du niveleur de quai (12) et d'un dispositif de contrôle de la position d'un véhicule (2) par rapport à ce quai, ce dispositif de contrôle comprenant au moins deux ensembles de détection (D1,D2) comprenant chacun au moins une paire source pulsée/récepteur (E/R) utilisant un rayonnement infrarouge placés au dessus de l'emplacement à une hauteur supérieure à la plus grande hauteur de véhicule attendue, le récepteur étant apte à recevoir le signal pulsé retourné vers la source émettrice du signal pulsé,
un premier ensemble de détection (D1) étant placé de manière à être apte à envoyer un signal et à recevoir le signal retourné sur au moins deux lignes de détection appartenant à un plan parallèle au nez de quai situé à une distance du nez du quai (1) dite minimale (L1) correspondant à une distance minimale d'approche du véhicule (2) par rapport au quai (1) supérieure à l'épaisseur des butoirs,
et un second ensemble de détection (D2) étant placé de manière à être apte à envoyer un signal et à recevoir le signal retourné sur au moins une ligne de détection dite centrale située dans le plan vertical médian de l'emplacement (Ei) à une distance du quai dite d'approche (L2) fonction de la longueur maximale du niveleur de quai (12) et de la longueur d'empiétement de sécurité du niveleur de quai (12) sur le véhicule (2),
le dispositif de contrôle comprenant en outre au moins un module électronique relié aux paires sources/récepteurs (E/R) pour recevoir l'instant d'émission de chaque source et l'instant de réception du signal reçu en retour et apte à calculer la durée de vol du signal pulsé émis par chaque source et retourné vers celle-ci pour détecter la présence ou l'absence du véhicule (2) le long des lignes de détection et à actionner un dispositif d'avertissement en fonction de la durée de vol, ce dispositif d'avertissement signalant la position correcte du véhicule (2) seulement lorsque le second ensemble de détection (D2) détecte la présence du véhicule (2) dans la ligne de détection centrale et le premier ensemble de détection (D1) détecte l'absence du véhicule (2) dans les au moins deux lignes de détection.

2. Quai selon la revendication 1, **caractérisé en ce que** le premier ensemble de détection (D1) comprend deux paires source/récepteur chacune située dans un plan vertical perpendiculaire au nez de quai (1) et passant substantiellement par les butoirs (10), les lignes de détection étant alors verticales en vis-à-vis des butoirs (10).

3. Quai selon la revendication 1, **caractérisé en ce que** le premier ensemble de détection (D1) comprend une unique paire source/récepteur placée dans le plan vertical médian de l'emplacement (Ei) et montée sur un mécanisme oscillant autour d'un axe perpendiculaire au plan parallèle au nez de quai (1) permettant de balayer ce plan parallèle au nez du quai (1) sur un secteur angulaire (31) prédéfini de part et d'autre de l'axe médian par la position des butoirs (10) sur le nez de quai (1) pour permettre que l'espace en vis-à-vis des butoirs (10) et entre les butoirs (10) soit balayé, les lignes de détection étant multiples, et réparties en éventail dans ce secteur angulaire (31).

4. Quai selon la revendication 3, **caractérisé en ce que** le module électronique est apte à traiter spécifiquement les données de durée de vol observées avec le premier ensemble de détection (D1) sur un secteur angulaire correspondant à la largeur du niveleur de quai (12) pour détecter le déploiement de celui-ci.

5. Quai selon l'une des revendications précédentes, **caractérisé en ce que** le dispositif d'avertissement est apte à inhiber le déploiement du niveleur (12) tant que l'arrière du véhicule (2) n'est pas détecté comme étant positionné entre les deux plans parallèles au nez de quai (1) auxquels appartiennent les lignes de détection des deux ensembles de détection.

6. Quai selon l'une des revendications précédentes, **caractérisé en ce qu'**il comprend un détecteur de présence annexe placé à une distance du nez de quai (1) supérieure aux distances auxquelles sont placées les deux ensembles de détection (D1,D2), ce détecteur de présence annexe déclenchant une mise sous tension des ensembles de détection (D1,D2) et, le cas échéant, du mécanisme oscillant.

7. Quai selon la revendication 6, **caractérisé en ce que** le détecteur de présence annexe est un détecteur choisi parmi les détecteurs à boucle magnétique placés au sol et les détecteurs à paire source/récepteur infrarouge à faisceau orienté vers le bas dans le plan vertical médian de l'emplacement.

8. Quai selon l'une des revendications précédentes, **caractérisé en ce que** le module électronique est apte à déclencher le dispositif d'avertissement seulement pour un temps de vol inférieur à un temps de vol prédéterminé correspondant à une hauteur de gabarit minimale (Hm) prédéterminée.

9. Quai selon l'une des revendications précédentes, **caractérisé en ce que** la distance minimale prédéterminée (L1) est comprise dans l'intervalle défini par l'épaisseur du butoir + 20 millimètres et l'épaisseur du butoir + 50 millimètres.

10. Quai selon l'une des revendications précédentes, **caractérisé en ce que** la distance d'approche (L2) est comprise dans l'intervalle défini par la longueur maximale du niveleur de quai diminuée de la longueur d'empiétement de sécurité et diminuée également de 20 millimètres et la longueur maximale du niveleur de quai diminuée de la longueur d'empiétement de sécurité et diminuée également de 200 millimètres.

11. Dispositif de contrôle de la position d'un véhicule (2) destiné à être placé par rapport à un quai (1) selon l'une des revendications précédentes, ce dispositif de contrôle comprenant au moins deux ensembles de détection (Dl,D2) comprenant chacun au moins une paire source pulsée/récepteur (E/R) utilisant un rayonnement infrarouge destinés à être placés au dessus de l'emplacement à une hauteur supérieure à la plus grande hauteur de véhicule attendue, le récepteur étant apte à recevoir le signal pulsé retourné vers la source émettrice du signal pulsé,
un premier ensemble de détection (D1) étant destiné à être en outre placé par rapport au quai de manière à être apte à envoyer un signal et à recevoir le signal retourné sur au moins deux lignes de détection appartenant à un plan parallèle au nez de quai situé à une distance du nez du quai (1) dite minimale (L1) correspondant à une distance minimale d'approche du véhicule (2) par rapport au quai (1) supérieure à l'épaisseur des butoirs,
et un second ensemble de détection (D2) étant destiné à être en outre placé par rapport au quai de manière à être apte à envoyer un signal et à recevoir le signal retourné sur au moins une ligne de détection dite centrale située dans le plan vertical médian de l'emplacement (Ei) à une distance du quai dite d'approche (L2) réglable en fonction de la longueur maximale du niveleur de quai (12) et de la longueur d'empiétement de sécurité du niveleur de quai (12) sur le véhicule (2),
le dispositif comprenant en outre au moins un module électronique relié aux paires sources/récepteurs (E/R) pour recevoir l'instant d'émission de chaque source et l'instant de réception du signal reçu en retour et apte à calculer la durée de vol du signal pulsé émis par chaque source et retourné vers celle-ci pour détecter la présence ou l'absence du véhicule (2) le long des lignes de détection et à actionner un dispositif d'avertissement en fonction de la durée de vol, ce dispositif d'avertissement signalant la position correcte du véhicule (2) seulement lorsque le second ensemble de détection (D2) détecte la présence du véhicule (2) dans la ligne de détection centrale et le premier ensemble de détection (D1) détecte l'absence du véhicule (2) dans les au moins deux lignes de détection.
